# EUROPEAN PATENT APPLICATION

(11) **EP 4 682 455 A1**
(43) Date of publication of application: **21.01.2026**
(21) Application number: 24189495.5
(22) Date of filing: 18.07.2024
(51) Int. Cl.: F28D 20/02

(54) **A COMBINED HEAT EXCHANGER AND A HEAT EXCHANGER SYSTEM**

(71) Applicant: VOLVO TRUCK CORPORATION, 405 08 Göteborg (SE)
(72) Inventor: Achar, Vinay, 560037 Bangalore (IN); Pare, Sagar, 444805 Achalpur City (IN); Ajrawat, Sahil, 141013 Ludhiana (IN)
(74) Representative: Kransell & Wennborg KB

(57) **Abstract**

A combined heat exchanger (1) for cooling of both a coolant (22) and a refrigerant (24). The combined heat exchanger (1) comprises a first heat exchanger unit (10), a second heat exchanger unit (14). A phase change material circuit (18) extends through both the first heat exchanger unit (10) and the second heat exchanger unit (14), the phase change material circuit (18) being in thermal communication with both a coolant circuit (12) and a refrigerant circuit (16). The disclosure also relates to a heat exchanger system (2) comprising the heat exchanger (1) and to a vehicle, vessel or stationary machinery (3) comprising the heat exchanger system (2).

## Description

### TECHNICAL FIELD

The disclosure relates generally to heat exchangers. In particular aspects, the disclosure relates to a combined heat exchanger and a heat exchanger system. The disclosure can be applied to heavy-duty vehicles, such as trucks, buses, and construction equipment, among other vehicle types. The disclosure can also be applied to vessels, such as marine vessels and industrial appliances, such as stationary machinery. The disclosure is especially applicable to electrically driven machines. Although the disclosure may be described with respect to a particular vehicle, vessel or machine, the disclosure is not restricted to any particular vehicle, vessel or machine.

### BACKGROUND

As electric vehicles become more common, battery cooling systems are becoming increasingly important. One of the key challenges of battery cooling is the need to cool both the refrigerant and the coolant in an efficient and effective manner. Traditional heat exchangers, such as tube or plate heat exchangers, are often used to cool either the refrigerant or the coolant, but not both.

### SUMMARY

According to a first aspect of the disclosure, there is provided a combined heat exchanger for cooling of both a coolant and a refrigerant, the combined heat exchanger comprising a first heat exchanger unit comprising a coolant circuit and a second heat exchanger unit comprising a refrigerant circuit. The phase change material circuit extends through both the first heat exchanger unit and the second heat exchanger unit. The phase change material circuit is in thermal communication with both the coolant circuit and the refrigerant circuit. Thermal communication as used herein may mean that there exists heat transfer between the between the phase change material circuit and the coolant and refrigerant circuits. The first aspect of the disclosure may seek to provide a more efficient and compact heat exchanger, especially for electric energy storage systems of electric vehicles, vessels and industrial appliances, where a common system cools the refrigerant and the coolant together. A technical benefit may include a compact and efficient device where both a coolant and a refrigerant are cooled by the same heat exchanger.

The first heat exchanger comprising the coolant circuit may for instance be configured for heat transfer by a high flow rate. The coolant is a cooling medium that absorbs heat from an object to be cooled, for instance as a liquid. It then flows through the coolant circuit and transfers the absorbed heat in a different location to a different medium, which different medium may advantageously be a phase change material in the phase change material circuit.

The second heat exchanger comprising the refrigerant circuit may for instance be configured for heat transfer via a large surface area. The refrigerant may be a cooling medium that absorbs heat from an object to be cooled, for instance as a liquid and changes phase in the process to a gas which thereafter flows through the refrigerant circuit and transfers the absorbed heat in a different location to a different medium and condenses back to a liquid in the process. The different medium may advantageously be the phase change material in the phase change material circuit.

The phase change material circuit provides an additional cooling effect as the phase change material circuit absorbs heat from both the coolant and the refrigerant and transports it away to a further location. The phase change property of the phase change material enables the phase change material to absorb additional heat as it changes phase, as compared to non-phase change materials.

Optionally in some examples, including in at least one preferred example, the thermal communication, during operation of the combined heat exchanger, comprises heat transfer by conduction from the first heat exchanger unit and from the second heat exchanger unit to the phase change material circuit. A technical benefit may include efficient heat transfer as the coolant circuit and the phase change material circuit, as well as the refrigerant circuit and the phase change material circuit are in a thermally conductive contact with each other. The coolant circuit and the refrigerant circuit are fluidly separated from the phase change material circuit by a thermally conductive barrier, such as a metal wall.

Optionally in some examples, including in at least one preferred example, the coolant circuit of the first heat exchanger unit comprises a coolant inlet and a coolant outlet, and wherein the coolant inlet and the coolant outlet are configured to be fluidly connected to an external coolant circuit for the cooling of at least one coolant system.

Thus, the coolant enters the coolant circuit via the coolant inlet and exits the coolant circuit via the coolant outlet. The external coolant circuit may be arranged to transport? the coolant a coolant system to cool components such as an electric energy storage system, e.g. a battery or batteries.

Optionally in some examples, including in at least one preferred example, the refrigerant circuit of the second heat exchanger unit comprises a refrigerant inlet and a refrigerant outlet. The refrigerant inlet and the refrigerant outlet may be configured to be fluidly connected to an external refrigerant circuit for the cooling of at least one refrigerant system.

Thus, the refrigerant enters the refrigerant circuit via the refrigerant inlet and exits the refrigerant circuit via the refrigerant outlet. The external refrigerant circuit may be arranged to transport the refrigerant to a refrigerant system to cool components such as an or a cabin of a vehicle, etc.

Optionally in some examples, including in at least one preferred example, the first heat exchanger unit is a tube heat exchanger. As such, the coolant is transported through a tube of the first heat exchanger unit. The tube may have a meandering shape, providing a large surface area in contact with the phase change material circuit. The tube may further be configured with a relatively large diameter to enable a high flow rate of coolant through the tube.

Optionally in some examples, including in at least one preferred example, the second heat exchanger unit is a plate heat exchanger. The plate heat exchanger may comprise thin corrugated plates, enabling a large surface area. The refrigerant circuit may be configured on one side of the plates and the phase change material circuit may be arranged on the other side of the plates such that efficient heat transfer is enabled through the plates.

Optionally in some examples, including in at least one preferred example, a pump is fluidly connected to the phase change material circuit. The pump may be configured to circulate a phase change material through the phase change material circuit such that the phase change material is first circulated through the second heat exchanger unit and such that the phase change material is subsequently circulated through the first heat exchanger unit.

The phase change material may thus first absorb heat from the refrigerant, which commonly has a higher temperature than the coolant. The phase change material may change phase when absorbing heat from the refrigerant. The phase change material is then further circulated to first heat exchanger unit comprising the coolant where heat is absorbed from the coolant. Efficiency is improved when the phase change material first absorbs heat from the hotter refrigerant and thereafter from the less hot coolant. The pump thereafter circulates the phase change material to a further location where the absorbed heat is dissipated to a further medium, whereby the phase change material undergoes a phase change and is returned to the previous phase.

Optionally in some examples, including in at least one preferred example, the pump is configured to circulate a semi-solid phase change material through the phase change material circuit. A semi-solid phase change material is defined as a material which changes phase between a semi-solid phase and a liquid phase. In its semi-solid form, the material does not flow by itself, such as under influence gravity. However, in its semi-solid form, the material may still be transported by the pump. As the semi-solid phase change material absorbs heat it undergoes a phase change to a liquid phase, i.e., to a liquid form. The semi-solid phase may be defined by a viscosity or range of viscosity higher than a viscosity of the liquid when being in a liquid phase.

According to a second aspect of the disclosure, there is provided a heat exchanger system comprising the combined heat exchanger of any of the examples of the first aspect of the disclosure. The heat exchanger system further comprises at least one coolant system, at least one external coolant circuit fluidly connected to the combined heat exchanger unit and to the at least one coolant system, at least one refrigerant system, and at least one external refrigerant circuit fluidly connected to the combined heat exchanger and to the at least one refrigerant system. The second aspect of the disclosure may seek to provide an efficient heat exchanger system comprising the combined heat exchanger where components are efficiently cooled. A technical benefit may include a compact and efficient heat exchanger system for the cooling of electric energy storage systems, such as batteries of electric vehicles, vessels or industrial appliances.

The coolant system is configured to transfer heat from the components to be cooled to the coolant and to transport the coolant, via the external coolant circuit, to the combined heat exchanger.

The refrigerant system is configured to transfer heat from the components to be cooled to the refrigerant and to transport the refrigerant, via the external refrigerant circuit, to the combined heat exchanger.

Optionally in some examples, including in at least one preferred example, the heat exchanger system further comprises a coolant for circulating through the at least one coolant system, through the at least one external coolant circuit and through the coolant circuit of the first heat exchanger unit. The heat exchanger system may further comprise a refrigerant for circulating through the refrigerant system, through the at least one external refrigerant circuit and through the refrigerant circuit of the second heat exchanger unit. The heat exchanger system may further comprise a phase change material for circulating through the phase change material circuit.

Thus, the coolant, the refrigerant and the phase change material are each comprised in their respective closed circuits.

Optionally in some examples, including in at least one preferred example, the phase change material is a semi-solid phase change material.

Properties of the semi-solid phase change material is described hereinabove.

Optionally in some examples, including in at least one preferred example, the phase change material comprises any one of paraffin wax, salt hydrates, eutectic mixtures, metal alloy, or polyethylene glycol (PEG).

According to a third aspect of the disclosure, there is provided a vehicle, a vessel or an industrial appliance comprising the heat exchanger system of any of the examples of the second aspect pf the disclosure. The third aspect of the disclosure may seek to provide such a vehicle, vessel or industrial appliance having an efficient heat exchanger system and an efficient cooling of components, especially electric energy storage systems for electric vehicles, vessels and industrial appliances.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**Fig. 1** is an exemplary vehicle according to an example.
**Fig. 2** is an exemplary combined heat exchanger according to an example.
**Fig. 3** is an exemplary heat exchanger unit according to an example.
**Fig. 4** is an exemplary heat exchanger unit according to an example.
**Fig. 5** is an exemplary heat exchanger system according to an example.

### DETAILED DESCRIPTION

The detailed description set forth below provides information and examples of the disclosed technology with sufficient detail to enable those skilled in the art to practice the disclosure.

A challenge for the development of electric vehicles is the cooling of the battery systems using a refrigerant and a coolant. Conventional heat exchangers, such as tube or plate heat exchangers are often applied to cool either the refrigerant or the coolant, but not both.

The present disclosure seeks to provide an efficient and compact solution to cool both the refrigerant and the coolant by using an additional cooling medium in the form of a phase change material that is circulated through a combined heat exchanger.

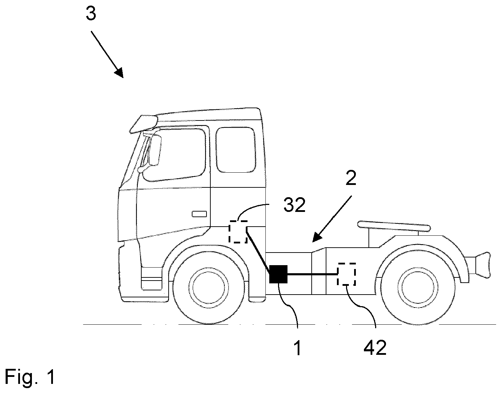

**Fig. 1** is an exemplary vehicle 3 according to an example. Although **Fig. 1** depicts a vehicle, the disclosure is not limited to vehicle, but may be applied also to vessels, such as marine vessels, and to industrial appliances, such as stationary machinery. The vehicle comprises a heat exchanger system 2 according to an example. The heat exchanger system 2 comprises a combined heat exchanger 1 according to an example. The heat exchanger system further comprises a coolant system 32 and a refrigerant system 42, to be described in more detail below.

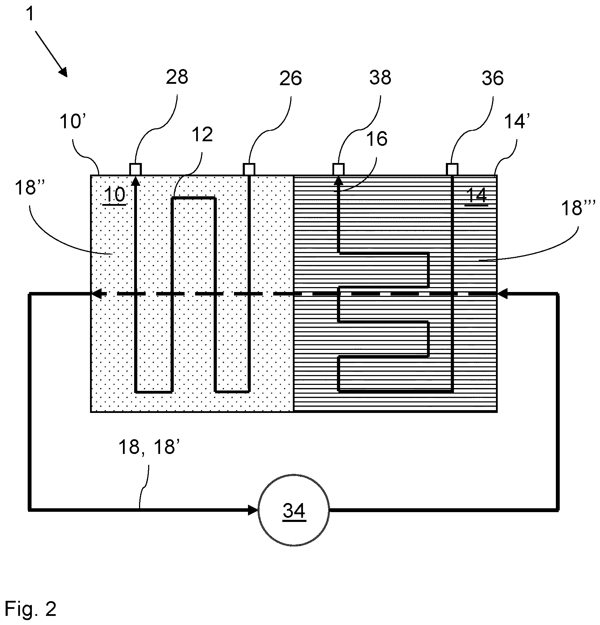

**Fig. 2** illustrates the combined heat exchanger 1 indicated in **Fig. 1****.** The combined heat exchanger 1 is intended to cool both a coolant 22 (not shown) in a coolant circuit 12 and a refrigerant 24 (not shown) in a refrigerant circuit. The combined heat exchanger 1 comprises a first heat exchanger unit 10 comprising the coolant circuit 12, a second heat exchanger unit 14 comprising the refrigerant circuit 16. A phase change material circuit 18 extends through both the first heat exchanger unit 10 and the second heat exchanger unit 14. The phase change material circuit 18 is in thermal communication with both the coolant circuit 12 and the refrigerant circuit 16.

The exemplified combined heat exchanger 1 is a more efficient and compact heat exchanger than conventional heat exchangers, especially for electric energy storage systems, such as battery systems of electric vehicles, vessels and industrial appliances/stationary machinery. Accordingly, both the coolant 22 and the refrigerant 24 are cooled by the combined heat exchanger 1.

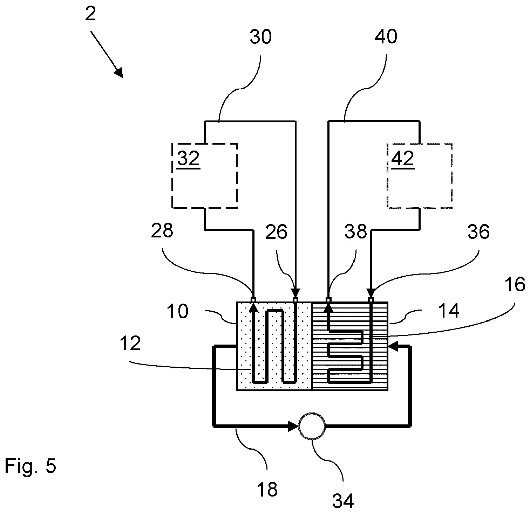

The first heat exchanger unit 10 comprising the coolant circuit 12 may for instance be configured for heat transfer under a high flow rate. The coolant 22 (not shown) may be a cooling medium that absorbs heat from an object to be cooled by a coolant system 32 (see **Fig. 5****),** for instance as a liquid coolant 22, which then flows through the coolant circuit 12 and transfers the absorbed heat in a different location to a different medium. The different medium may for instance be a phase change material 20 in the phase change material circuit 18.

The second heat exchanger unit 14 comprising the refrigerant circuit 16 may for instance be configured for heat transfer via a large surface area. The refrigerant 24 (not shown) may be a cooling medium that absorbs heat from an object to be cooled by a refrigerant system 42 (see **Fig. 5****),** The refrigerant 24 may absorb heat as a liquid and may change phase in the process to a gas, which thereafter flows through the refrigerant circuit 16 and transfers the absorbed heat in a different location to a different medium. The refrigerant 24 condenses back to a liquid in the process of cooling down. The different medium to which heat from the refrigerant 24 is transferred may advantageously be the phase change material 20 in the phase change material circuit 18.

The dashed line, shown in **Fig. 2****,** of the phase change material circuit 18 does not depict a structural component, such as a conduit, but may indicate an example direction of flow of the phase change material 20 through the first and second heat exchanger units 10, 12.

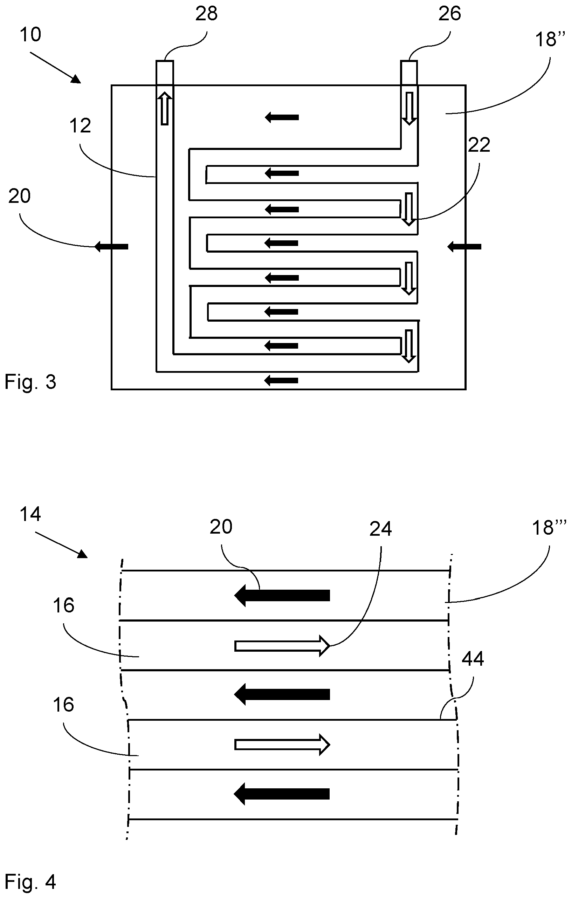

As shown in **Fig. 2****,** the phase change material circuit 18 may comprise a conduit, such as a tube 18' outside the first and second heat exchanger units 10, 14. As conceptually illustrated in **Fig. 3** and **Fig. 4****,** the phase change material circuit 18 may further comprise a first volume 18" enclosed by a first housing 10' (see **Fig. 2****)** of first heat exchanger unit 10 and a second volume 18‴ enclosed by a second housing 14' (see **Fig. 2****)** of the second heat exchanger unit 14.

The phase change material circuit 18, 18", 18‴ may thus be arranged as a volume around the coolant circuit 12 in the first housing 10' of the first heat exchanger unit 10 and around the refrigerant circuit 16 in the second housing 14' of the second heat exchanger unit 14. It is to be understood that "arranged around" indicates that the phase change material 20 may be enabled to flow freely around the coolant circuit 12 and the refrigerant circuit 16, through the first volume 18" and through the second volume 18‴, respectively, during operation of the combined heat exchanger 1.

The phase change material circuit 18 may provide an additional cooling effect as compared to conventional heat exchangers since the phase change material circuit 18 absorbs heat from both the coolant 22 and from the refrigerant 24 and transports it away to a further location where it is dissipated. In addition, the phase change property of the phase change material 20 enables the phase change material 20 to absorb additional heat during the phase change transition, as compared to non-phase change materials applied as cooling media.

The thermal communication, during operation of the combined heat exchanger 1, may comprise heat transfer by conduction from the coolant circuit 12 of the first heat exchanger unit 10 and from the refrigerant circuit 16 of the second heat exchanger unit 14 to the phase change material circuit 18. Thereby, efficient heat transfer may be provided as the coolant circuit 12 and the phase change material circuit 18, as well as the refrigerant circuit 16 and the phase change material circuit 18 are in a thermally conductive contact with each other. The coolant circuit 12 and the refrigerant circuit 16 are fluidly separated from the phase change material circuit 18 by a thermally conductive barrier, such as a metal wall.

The coolant circuit 12 of the first heat exchanger unit 10 may comprise a coolant inlet 26 and a coolant outlet 28. The coolant inlet 26 and the coolant outlet 28 may be configured to be fluidly connected to an external coolant circuit 30 (see **Fig. 5****)** for the cooling of at least one coolant system 32 (see **Fig. 5****).**

Thus, the coolant 22 (not shown) enters the coolant circuit 12 via the coolant inlet 26 and exits the coolant circuit 12 via the coolant outlet 28. The external coolant circuit 30 may be arranged to transport the coolant 22 to the coolant system 32 to cool components such as an electric energy storage system, e.g. a battery or batteries.

The refrigerant circuit 16 of the second heat exchanger unit 14 may comprise a refrigerant inlet 36 and a refrigerant outlet 38. The refrigerant inlet 36 and the refrigerant outlet 38 may be configured to be fluidly connected to an external refrigerant circuit 40 (see **Fig. 5****)** for the cooling of at least one refrigerant system 42 (see **Fig. 5****).**

Thus, the refrigerant 24 enters the refrigerant circuit 16 via the refrigerant inlet 36 and exits the refrigerant circuit 16 via the refrigerant outlet 38. The external refrigerant circuit 40 may be arranged to transport the refrigerant 24 to a refrigerant system 40 to cool components such as an electric energy storage system, e.g. a battery or batteries, or a cab of a vehicle 3, etc.

The first heat exchanger unit 10 may be a tube heat exchanger. As such, the coolant circuit 12 may comprise a tube 12. The barrier separating the coolant 22 from the phase change material 20 may thus be a tube wall. The coolant 22 may be transported through the tube 12 of the first heat exchanger unit 10. The tube 12 may have a meandering or otherwise multi-curved shape, thereby providing a large surface area in contact with the phase change material circuit 18, 18". The tube 12 may further be configured with a relatively large diameter to enable a high flow rate of coolant 22 through the tube 12.

The second heat exchanger unit 14 may be a plate heat exchanger 14. The plate heat exchanger 14 may comprise thin corrugated plates 44, enabling a large surface area. The barrier fluidly separating the refrigerant 24 from the phase change material 20 may thus be the corrugated plates 44. The refrigerant circuit 16 may be configured on one side of the plates 44 and the phase change material circuit 18, 18‴ may be arranged on an opposite side of the plates 44, as illustrated in **Fig. 4****,** such that efficient heat transfer by conduction is enabled through the plates 44.

A pump 34 may be fluidly connected to the phase change material circuit 18, 18', 18", 18‴. The pump 34 may be configured to circulate the phase change material 20 through the phase change material circuit 18 such that the phase change material 20 is first circulated through the second heat exchanger unit 14 and such that the phase change material is subsequently circulated through the first heat exchanger unit 10.

The phase change material 20 may thus first absorb heat from the refrigerant 24 in the refrigerant circuit 16 of the second heat exchanger unit 14. The refrigerant 24 commonly has a higher operating temperature than the coolant 22. The phase change material 20 may change phase when absorbing heat from the refrigerant 24. The phase change material 20 may then be further circulated to first heat exchanger unit 10 comprising the coolant 22 where heat is absorbed from the coolant 22. Efficiency is improved when the phase change material 20 first absorbs heat from the hotter refrigerant 24 and thereafter from the less hot coolant 22. The pump 34 may thereafter circulate the phase change material 20 to a further location where the absorbed heat is dissipated to a further medium, whereby the phase change material 20 undergoes a phase change and is returned to the previous phase.

The pump 34 may be configured to circulate a semi-solid phase change material 20 through the phase change material circuit 18, 18', 18", 18"'. A semi-solid phase change material 20 is defined a material which changes phase between a semi-solid phase and a liquid phase. In its semi-solid form, the material does not flow by itself, such as under influence gravity. However, in its semi-solid form, the material may still be transported by the pump 34. As the semi-solid phase change material 20 absorbs heat it undergoes a phase change to a liquid phase.

As shown by the example of Fig. 5, the present disclosure also provides for a heat exchanger system 2 comprising the combined heat exchanger 1. The heat exchanger system 2 further comprises at least one coolant system 32, at least one external coolant circuit 30 fluidly connected to the combined heat exchanger 1 and to the at least one coolant system 32, at least one refrigerant system 42, and at least one external refrigerant circuit 40 fluidly connected to the combined heat exchanger 1 and to the at least one refrigerant system 42. Thereby, an efficient heat exchanger system 2 is provided, comprising the combined heat exchanger 1 where components of the system are efficiently cooled. The coolant system 32 and the refrigerant system 42 are indicated by dashed boxes which symbolize arrangements of fluid conduits thermally connected with components to be cooled. The components may for instance be part of an electric energy storage system, such as a battery system.

The coolant system 32 is configured to transfer heat from the components to be cooled to the coolant 22 and to transport the coolant 22, via the external coolant circuit 30, to the combined heat exchanger 1.

The refrigerant system 40 is configured to transfer heat from the components to be cooled to the refrigerant 24 and to transport the refrigerant 24, via the external refrigerant circuit 40, to the combined heat exchanger 1.

The heat exchanger system 2 may further comprise a coolant 22 for circulating through the at least one coolant system 32, through the at least one external coolant circuit 30 and through the coolant circuit 12 of the first heat exchanger unit 10. The heat exchanger system 2 may further comprise a refrigerant 24 for circulating through the refrigerant system 42, through the at least one external refrigerant circuit 40 and through the refrigerant circuit 16 of the second heat exchanger unit 14. The heat exchanger system 2 may further comprise a phase change material 20 for circulating through the phase change material circuit 18. The coolant 22, the refrigerant 24 and the phase change material 20 are each comprised in their respective closed circuits.

As mentioned hereinabove, the phase change material 20 may be a semi-solid phase change material 20. Details of the semi-solid phase change material is described above.

The phase change material 20 may comprise any one of paraffin wax, salt hydrates, eutectic mixtures, metal alloy, or polyethylene glycol (PEG).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A combined heat exchanger (1) for cooling of both a coolant (22) and a refrigerant (24), the combined heat exchanger (1) comprising:
- a first heat exchanger unit (10) comprising a coolant circuit (12),
- a second heat exchanger unit (14) comprising a refrigerant circuit (16), and wherein a phase change material circuit (18) extends through both the first heat exchanger unit (10) and the second heat exchanger unit (14), the phase change material circuit (18) being in thermal communication with both the coolant circuit (12) and the refrigerant circuit (16).

2. The combined heat exchanger (1) of claim 1, wherein the thermal communication, during operation of the combined heat exchanger (1), comprises heat transfer by conduction from the first heat exchanger unit (10) and from the second heat exchanger unit (14) to the phase change material circuit (18).

3. The combined heat exchanger (1) of claim 1 or 2, wherein the coolant circuit (12) of the first heat exchanger unit (10) comprises a coolant inlet (26) and a coolant outlet (28), and wherein the coolant inlet (26) and the coolant outlet (28) are configured to be fluidly connected to an external coolant circuit (30) for the cooling of at least one coolant system (32).

4. The combined heat exchanger (1) of any of claims 1-3, wherein the refrigerant circuit (16) of the second heat exchanger unit (14) comprises a refrigerant inlet (36) and a refrigerant outlet (38), and wherein the refrigerant inlet (36) and the refrigerant outlet (38) are configured to be fluidly connected to an external refrigerant circuit (40) for the cooling of at least one refrigerant system (42).

5. The combined heat exchanger (1) of any of claims 1-4, wherein the first heat exchanger unit (10) is a tube heat exchanger.

6. The combined heat exchanger (1) of any of claims 1-5, wherein the second heat exchanger unit (14) is a plate heat exchanger.

7. The combined heat exchanger (1) of any of claims 1-6, wherein a pump (34) is fluidly connected to the phase change material circuit (18), the pump being configured to circulate a phase change material (20) through the phase change material circuit (18) such that the phase change material (20) is first circulated through the second heat exchanger unit (14) and such that the phase change material (20) is subsequently circulated through the first heat exchanger unit (10).

8. The combined heat exchanger (1) of claim 7, wherein the pump (34) is configured to circulate a semi-solid phase change material (20) through the phase change material circuit (18).

9. The combined heat exchanger (1) of claim 8, wherein the semi-solid phase change material (20) comprises any one of paraffin wax, salt hydrates, eutectic mixtures, metal alloy, or polyethylene glycol, PEG.

10. A heat exchanger system (2) comprising the combined heat exchanger (1) of any of claims 1-9, wherein the heat exchanger system (2) further comprises:
- at least one coolant system (32)
- at least one external coolant circuit (30) fluidly connected to the combined heat exchanger unit (1) and to the at least one coolant system (32),
- at least one refrigerant system (42), and
- at least one external refrigerant circuit (40) fluidly connected to the combined heat exchanger (1) and to the at least one refrigerant system (42).

11. The heat exchanger system (2) of claim 10, further comprising:
- a coolant (22) for circulating through the at least one coolant system (32), the at least one external coolant circuit (30) and in the coolant circuit (12) of the first heat exchanger unit (10),
- a refrigerant (24) for circulating through the refrigerant system (42), in the at least one external refrigerant circuit (40) and in the refrigerant circuit (16) of the second heat exchanger unit (14), and
- a phase change material (20) for circulating in the phase change material circuit (18).

12. The heat exchanger system (2) of claim 11, wherein the phase change material (20) is a semi-solid phase change material.

13. The heat exchanger system (2) of claim 11 or 12, wherein the phase change material (20) is a semi-solid-liquid phase change material.

14. The heat exchanger system (2) of any one of claims 11-13, wherein the phase change material (20) comprises any one of paraffin wax, salt hydrates, eutectic mixtures, metal alloy, or polyethylene glycol, PEG.

15. A vehicle or vessel or stationary machinery (3) comprising the heat exchanger system (2) of any of claims 11-14.
